Europäisches Patentamt

European Patent Office

Office européen des brevets

(11) Veröffentlichungsnummer: **0 031 535**
B1

# EUROPÄISCHE PATENTSCHRIFT

(45) Veröffentlichungstag der Patentschrift:
17.11.82

(51) Int. Cl.³: **C 02 F 1/42, B 01 J 49/00**

(21) Anmeldenummer: **80107919.5**

(22) Anmeldetag: **15.12.80**

(54) **Verfahren zum zyklischen Regenerieren von Wasserenthärtungsanlagen und programmgesteuerte Wasserenthärtungsanlage zur Durchführung des Verfahrens.**

(30) Priorität: **17.12.79 DE 2950728**

(43) Veröffentlichungstag der Anmeldung:
**08.07.81 Patentblatt 81/27**

(45) Bekanntmachung des Hinweises auf die Patenterteilung:
**17.11.82 Patentblatt 82/46**

(84) Benannte Vertragsstaaten:
**AT BE CH FR GB IT LI NL**

(56) Entgegenhaltungen:
**CH-A-128 483**
**DE-B-2 300 606**

(73) Patentinhaber: **Gebr. Heyl KG Gesellschaft für Analysentechnik, Postfach 305, D-3200 Hildesheim (DE)**

(72) Erfinder: **Meiser, Ewald, Staufenstrasse 27, D-8214 Weisham (DE)**
Erfinder: **Bauer, Horst, Von Bodelschwingh-Weg 46-48, D-5042 Erftstadtt-Lechenich (DE)**

(74) Vertreter: **Müller-Boré, Deufel, Schön, Hertel Patentanwälte, Postfach 86 07 20 Siebertstrasse 4, D-8000 München 86 (DE)**

Verfahren zum zyklischen Regenerieren von Wasserenthärtungsanlagen und
programmgesteuerte Wasserenthärtungsanlage zur Durchführung des Verfahrens

Die Erfindung betrifft ein Verfahren zum zyklischen Regenerieren von Wasserenthärtungsanlagen, die eine Austauschermasse in einem Aufbereitungsbehälter und ein Regeneriermittel in einem Vorratsbehälter umfassen, bei welchem zuerst Regenerierungsmittel von unten nach oben durch die Austauschermasse hindurchgeführt, nachfolgend die Austauschermasse mit Brauchwasser in gleicher Strömungsrichtung langsam nachgewaschen und dann kräftig rückgespült wird, während im Aufbereitungsbetrieb Rohwasser von oben nach unten geführt wird sowie eine programmgesteuerte Wasserenthärtungsanlage mit einem eine Austauschermasse aufnehmenden Aufbereitungsbehälter, einem ein Regeneriermittel aufnehmenden Vorratsbehälter, einem Zentralsteuerventil, das Anschlüsse für Rohwasser, Brauchwasser, Regeneriermittel zum oberen und zum unteren Bereich des Aufbereitungsbehälters umfaßt, und einer Programmsteuerung, die einen Regenerationsbetrieb in Abhängigkeit von der Härte des Rohwassers und dem Grad der Erschöpfung der Austauschermasse auslöst und zur Regeneration zuerst Regeneriermittel von unten nach oben durch die Austauschermasse hindurchströmen und nachfolgend Brauchwasser in gleicher Strömungsrichtung nachwaschen und dann kräftig rückspülen läßt, insbesondere zur Durchführung des Verfahrens nach einem der Ansprüche 1 bis 7.

Derartige Verfahren und programmgesteuerte Wasserenthärtungsanlagen sind bekannt (DE-A 1 642 525 sowie veröffentlichte Funktionsschemen der Firma Clearmaster). Bei diesen bekannten Verfahren wird das Regeneriermittel durch die Austauschermasse mit einer Strömungsgeschwindigkeit von 3 bis 5 m/h hindurchgeführt. Üblicherweise strömt beim langsamen Nachwaschen Wasser mit im wesentlichen der gleichen Geschwindigkeit, da das Nachwaschen durch das Injektorwasser erfolgt, mit welchem das Regeneriermittel angesaugt und durchgeführt worden ist. Das nachfolgende Rückspülen erfolgt dann mit einer Geschwindigkeit von ca. 8 m/h, bei der eine Durchmischung der Austauschermasse sowie eine Abtrennung und Ausschwemmung angelagerter Feinstoffe erreicht werden soll. Weiterhin soll bei diesen bekannten Verfahren während der Durchströmung des Regeneriermittels durch die Austauschermasse diese aufgelockert werden.

Außerdem sind noch jüngere, weiterentwikkelte Verfahren bekannt, bei denen der Regenerationsbetrieb zunächst mit einem kräftigen Rückspülvorgang mit einer Strömungsrichtung von unten nach oben durch die Austauschermasse begonnen wird und dann Regeneriermittel in umgekehrter Richtung, d. h. von oben nach unten durch die Austauschermasse hindurchgeführt und dann in der gleichen Strömungsrichtung langsam nachgewaschen wird. Schließlich folgt noch ein Schnellwaschvorgang mit Strömungsrichtung von oben nach unten. Im Aufbereitungsbetrieb tritt das Rohwasser oben ein und strömt nach unten durch.

Weiterhin ist es bei programmgesteuerten Wasserenthärtungsanlagen bekannt, entweder eine Zeitsteuerung oder eine Wassermessersteuerung anzuwenden.

Bei der Zeitsteuerung wird der zeitliche Abstand zwischen zwei Regenerationen voreingestellt. Die tatsächliche Brauchwasserentnahme bleibt somit unberücksichtigt, so daß eine beim Einsetzen des Regenerationsbetriebes eventuell noch vorhandene Restkapazität der Austauschermasse verlorengeht. Der Betrieb ist hierbei in der Regel unwirtschaftlich und umweltbelastend, da für jeden Regenerationsbetrieb eine Menge an Regeneriermittel benutzt werden muß, die der Regenerierung einer vollkommen erschöpften Austauschermasse entspricht. Im anderen Extremfall kann es dazu kommen, daß die Austauschermasse bereits erschöpft ist, bevor die voreingestellte Zeit bis zur nächsten Regeneration abgelaufen ist, so daß es zu Härtedurchbrüchen kommt.

Bei einer Wassermessersteuerung erfolgt die Auslösung einer Regeneration nach Entnahme einer vorbestimmten Brauchwassermenge seit der letzten Regeneration, die in Abhängigkeit von der Kapazität der Wasserenthärtungsanlage und der Rohwasserhärte rechnerisch ermittelt und der Programmsteuerung eingegeben werden kann. Anlagen dieser Art sind technisch aufwendig und führen, wenn über längere Zeitspannen wenig oder gar kein Brauchwasser entnommen wird, zu langen Abständen zwischen zwei Regenerationen. Es kommt dann zu starken Verkeimungen der Austauschermasse, die in einigen anwendungsbereichen wie im haustechnischen und lebensmitteltechnischen Bereich vermieden werden muß. Außerdem können Regenerationsbetriebe ausgelöst werden zu einem Zeitpunkt, wenn gleichzeitig ein starker Brauchwasserbedarf ansteht.

Aufgabe der Erfindung ist demgegenüber, ein Verfahren der eingangs genannten Gattung sowie eine programmgesteuerte Wasserenthärtungsanlage der eingangs genannten Gattung derart weiterzubilden, daß zu jeder Zeit ein hygienischer Betrieb auf wirtschaftliche Weise mit geringstmöglicher Umweltbelastung gewährleistet ist.

Erfindungsgemäß wird diese Aufgabe dadurch gelöst, daß bei einem Verfahren der eingangs genannten Gattung sowohl ein maximaler zeitlicher Abstand als auch ein maximaler Grad der Erschöpfung der Austauschermasse zwischen zwei Regenerationen vorgewählt werden, daß bei jeder Regeneration nur eine dem Erschöpfungsgrad proportionale Menge an Regeneriermittel benutzt wird und daß das Regeneriermittel mit einer so geringen Strömungsgeschwindigkeit durch die Austauschermasse geführt wird, daß die Partikelschichten in der Austauschermasse im wesentlichen unverändert bleiben und daß bei einer programmgesteuerten Wasserenthärtungsanlage der eingangs genannten Gattung die Programmsteuerung umfaßt ein auf einen maximalen zeitlichen Abstand zwischen zwei Regenerationen voreinstellbares Zeitsteuerglied, ein auf die Härte des Rohwassers einstellbares Zumeßglied, das zu jeder Regeneration eine Menge an Regeneriermittel bereitstellt, die dem Grad der Erschöpfung der Austauschermasse proportional ist, und ein Verzögerungsglied, das die Strömungsgeschwindigkeit des Regeneriermittels durch die Austauschermasse soweit herabsetzt, daß die Partikelschichten in der Austauschermasse im wesentlichen unverändert bleiben.

Wesentlich hierbei ist es, daß eine ausreichend geringe Strömungsgeschwindigkeit des Regeneriermittels von unten nach oben durch die Austauschermasse erreicht und aufrechterhalten wird. Die Strömungsgeschwindigkeit muß so gering sein, daß die einzelnen Partikel der Austauschermasse ihre Lage zueinander nicht merklich ändern, d. h. übereinanderliegende dünne Schichten der Austauschermasse miteinander nicht vermischt werden. Denn da das Rohwasser in die Austauschermasse von oben eintritt und unten abgeführt wird, wird die Austauschermasse zuerst in ihrem oberen Grenzbereich erschöpft und die erschöpfte Masse der Austauschermasse wächst langsam von oben nach unten mit einer definierten Trennschicht zu der noch austauschaktiven Masse. Bei der oben definierten langsamen Strömungsgeschwindigkeit des Regeneriermittels verdrängt dieses das noch vorhandene Wasser in der Austauschermasse, ohne sich mit diesem zu vermischen und weiter verdünnt zu werden. Das Regeneriermittel erreicht somit schließlich unverdünnt, d. h. mit optimaler Konzentration, den oberen Bereich mit erschöpfter Masse der Austauschermasse und kann diese somit bei dem Durchströmen vollständig regenerieren. Hierdurch macht es die Erfindung möglich, mit einer Menge an Regeneriermittel auszukommen, die dem Grad der Erschöpfung der Austauschermasse proportional ist.

Hieraus ergeben sich eine Reihe von wesentlichen Vorteilen. Es ist möglich, eine Zeitsteuerung und eine Wassermessersteuerung miteinander zu kombinieren und damit den hygienischen Ansprüchen in vollem Umfange durch entsprechend kurze Zeitabstände zu genügen, während gleichzeitig die Umwelt mit der geringstmöglichen Masse an verbrauchter Regenerierlösung belastet wird. Denn es wird bei jedem Regeneriervorgang nur immer soviel Regeneriermittel benutzt, wie Kapazität der Austauschermasse verbraucht war.

Hierbei ist ebenfalls wichtig, daß — entgegen der Entwicklung des Standes der Technik zu wirksamen und hygienischen Wasserenthärtungsanlagen — der Regenerationsvorgang nicht mit einem Rückspülvorgang begonnen wird, sondern zu allererst Regeneriermittel in der erfindungsgemäß definierten Weise durch die Austauschermasse hindurchgeführt wird. Das starke Rückspülen folgt erfindungsgemäß ganz am Ende der Regeneration. .

Bevorzugt liegt die Strömungsgeschwindigkeit des Regeneriermittels durch die Austauschermasse unter oder höchstens bei 1 m/h, was in der Regel zu einer laminaren Strömung führt.

Gemäß einer vorteilhaften Weiterbildung der Erfindung wird zwischen zwei Regenerationen ständig bei jeder Entnahme von Brauchwasser einer der entnommenen Brauchwassermenge proportionale Menge an Lösewasser zur Zubereitung von Regeneriermittel aus der Brauchwasserleitung abgezweigt und das gelöste Regeneriermittel bereitgehalten. Hierzu ist bevorzugt eine Kolbenpumpe in Verbindung mit einem Dreiwegeventil vorgesehen, in welcher der Kolben entgegen der Einströmrichtung federvorgespannt ist. Die von einem Wassermesser angesteuerte Programmsteuerung schaltet dann jedesmal bei Eingang eines Impulses vom Wasserzähler das Dreiwegeventil durch zwischen der Brauchwasserleitung und der Kolbenpumpe und schaltet es dann nach einer vorbestimmten Zeit um und verbindet die Kolbenpumpe mit dem Vorratsbehälter für das Regeneriermittel. Da der Hub des Kolbens in Abhängigkeit von der Härte des Rohwassers einstellbar ist, wird somit bei jedem Impuls vom Wassermesser eine voreingestellte Menge an Lösewasser dem Vorratsbehälter für das Regeneriermittel zugeführt, die proportional sowohl zur Wasserhärte als auch zur entnommenen Brauchwassermenge ist. .

Schließlich ist bei einer Weiterbildung vorgesehen, daß eine Dosierpumpe mit einem Ansaugventil und einem Druckventil für Wasseraufbereitungschemikalien mit der Kolbenpumpe koppelbar ist, deren Dosierkolben vom Kolben der Kolbenpumpe betätigbar ist. Hierzu kann vorteilhafterweise ein die Schraubenfeder abstützender Deckel von der Kolbenpumpe abschraubbar sein, während die Dosierpumpe ein Kopplungsglied aufweist, das anstelle des Deckels in die Kolbenpumpe einschraubbar ist. Bevorzugt weist die Dosierpumpe einen Dosierkolben auf, der von einer Schraubenfeder gegen einen festen Endanschlag vorgespannt ist und bei einem Hub des Kolbens der Kolbenpumpe gegen dessen zweiten Endanschlag gegen einen eigenen zweiten Endanschlag bewegt wird. Eine solche Dosierpumpe dosiert dann jedesmal eine feste Menge von Wasseraufbereitungschemikalien in die Brauchwasserleitung, wenn der Wassermengenzähler einen Impuls abgibt.

Wasseraufbereitungschemikalien werden somit proportional zu dem entnommenen Brauchwasser eindosiert, und zwar unabhängig davon, auf welche Wasserhärte die Kolbenpumpe eingestellt worden ist.

Andere Weiterbildungen des erfindungsgemäßen Verfahrens und der erfindungsgemäßen Wasserenthärtungsanlage sind in weiteren Ansprüchen definiert.

Die Erfindung wird im folgenden anhand der Zeichnung beispielsweise beschrieben; in dieser zeigt:

Fig. 1 eine schematische Darstellung einer Wasserenthärtungsanlage, bei der ein Druckbehälter für die Austauschermasse und eine als Zumeßglied dienende Kolbenpumpe geschnitten, ein Regeneriermittel-Vorratsbehälter teilweise geschnitten und eine Programmsteueranordnung als Blockschaltbild dargestellt sind,

Fig. 2 eine alternative Ausführungsform, bei der das Zumeßglied einen Wassermengenzähler umfaßt,

Fig. 3 schematisch im Schnitt eine Ausführungsform der Kolbenpumpe,

Fig. 4 schematisch im Schnitt eine Ausführungsform einer Dosierpumpe, die an die Kolbenpumpe gemäß Fig. 3 angeschraubt werden kann,

Fig. 5 ganz schematisch einen Druckbehälter mit Austauschermasse und Sensoren zur Bestimmung der Trennschicht zwischen austauschaktiver Masse und erschöpfter Masse, und

Fig. 6 ganz schematisch im Schnitt einen Druckbehälter mit einer Meßanordnung zur Feststellung der Höhenlage der oberen Grenzschicht der Austauschermasse.

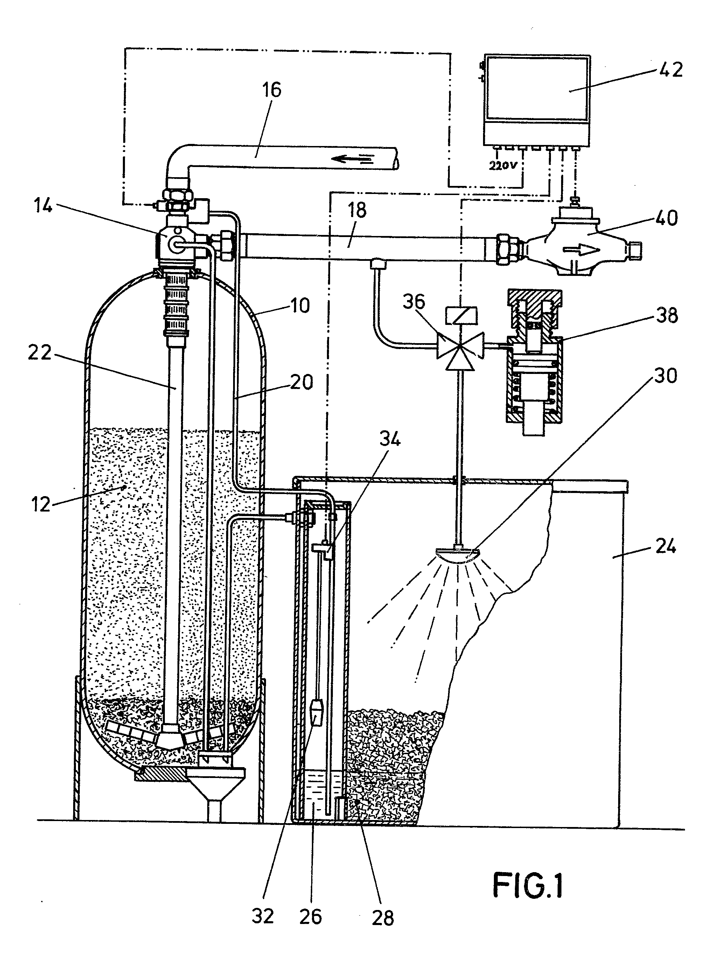

Nach Fig. 1 umfaßt eine Wasserenthärtungsanlage einen Druckbehälter 10 als Aufbereitungsbehälter, in den eine Austauschermasse 12 eingefüllt ist. Am Kopfende des Druckbehälters 10 ist ein Zentralsteuerventil 14 angeordnet, das Anschlüsse für eine Rohwasserleitung 16, eine Brauchwasserleitung 18, eine Regeneriermittelleitung 20, einen nicht dargestellten Zugang zum oberen Bereich des Druckbehälters 10 und eine Anschlußleitung 22 zu dem unteren Bereich des Druckbehälters 10 aufweist.

Außerdem umfaßt die Wasserenthärtungsanlage einen Vorratsbehälter 24 für Regeneriermittel 26. Das Regeneriermittel 26 ist eine Lösung aus einem im Vorratsbehälter 24 ebenfalls gelagerten Regeneriersalz 28 mit Wasser, das aus einem im Vorratsbehälter 24 angeordneten Sprühkopf 30 austritt.

Ein Höhenstandsmesser ist im Vorratsbehälter 24 ebenfalls vorgesehen, der einen Schwimmer 32 und einem Schalter 34 umfaßt.

Der Sprühkopf 30 ist über eine Leitung mit einem Anschluß eines Dreiwege-Magnetventils 36 verbunden. Der zweite Anschluß des Dreiwegeventils 36 ist mit einer Abzweigleitung der Brauchwasserleitung 18 verbunden. Der dritte Anschluß des Dreiwegeventils 36 führt zu einer Kolbenpumpe 38.

Ein Wassermengenzähler 40 ist in die Brauchwasserleitung 18 eingesetzt. Der Wassermengenzähler 40 kann nach der Impulstechnik arbeiten, wie es in der DE-B 2 300 606 beschrieben ist.

Schließlich weist die Wasserenthärtungsanlage gemäß Fig. 1 eine Programmsteuerung 42 auf, die über elektrische Leitungen mit dem Wasserzähler 40, dem Dreiwege-Magnetventil 36, dem Schalter 34 des Höhenstandsmessers und dem Zentralsteuerventil 14 verbunden ist.

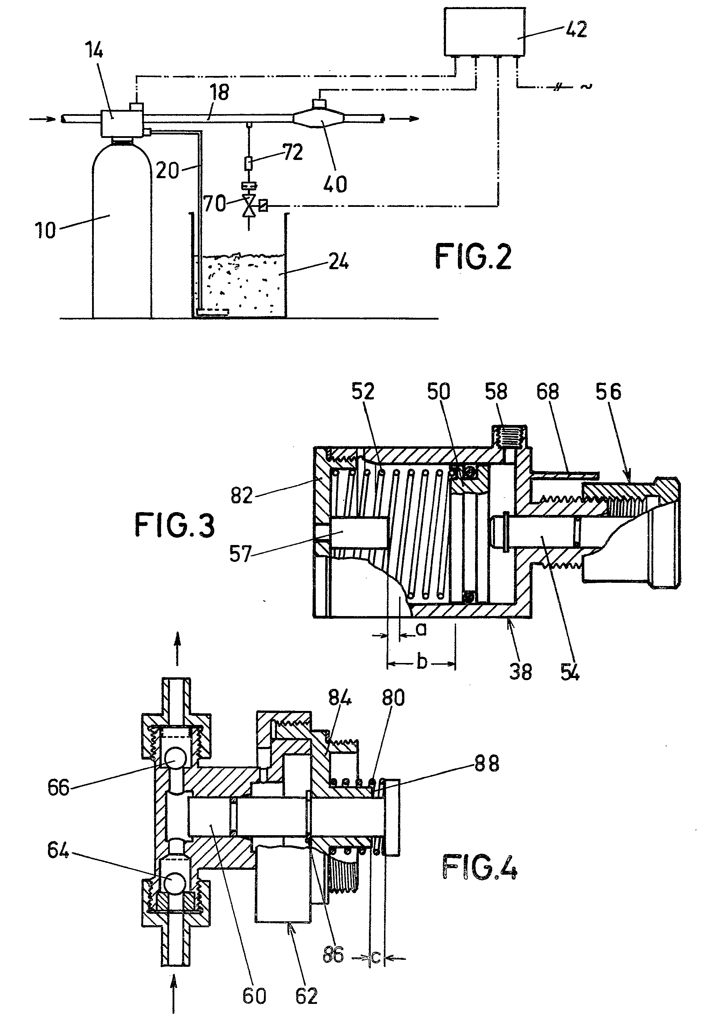

Eine Kolbenpumpe 38 ist in Fig. 3 dargestellt mit einem Kolben 50, der in eine Endlage gegen einen Endanschlag 54 mittels einer Schraubenfeder 52 vorgespannt ist. Ein weiterer Endanschlag 57 ist auf derselben Seite des Kolbens 50 wie die Schraubenfeder 52 angeordnet. Der erste Endanschlag 54 kann mittels einer Feineinstelleinrichtung 56, die als Mikrometerschraube dargestellt ist, in Hubrichtung des Kolbens verschoben werden. Eine Anschlußöffnung 58 mündet auf der von der Schraubenfeder 52 abgelegenen Seite des Kolbens 50 in den Zylinderraum der Kolbenpumpe 38.

Nach Fig. 4 ist eine Dosierpumpe 62 vorgesehen, die ein Kopplungsglied 84 umfaßt. Das Kopplungsglied 84 ist mit einem Gewinde ausgebildet, das mit dem Gehäuse der Kolbenpumpe 38 verschraubbar ist. Hierzu ist das Gehäuse der Kolbenpumpe 38 an einer Stirnseite mit einem die Schraubenfeder 52 abstützenden und den zweiten Endanschlag 57 tragenden Deckel 82 ausgebildet, der vom Gehäuse der Kolbenpumpe 38 abschraubbar ist. An dieser Stelle wird die Dosierpumpe 62 mit ihrem Kopplungsglied 84 eingeschraubt. Das Kopplungsglied 84 stützt dann die Schraubenfeder 52 der Kolbenpumpe 38 ab. Der zweite Endanschlag in der Kolbenpumpe 38 wird dann von einem zweiten Endanschlag 88 in der Dosierpumpe 62 gebildet, in welchem ein Dosierkolben 60 verschiebbar gelagert ist, der mittels einer Schraubenfeder 80 gegen einen ersten Endanschlag 86 vorgespannt ist. Der Dosierkolben 60 ist an seinem in die Kolbenpumpe 38 hineinragenden Ende mit einem verbreiterten Kopfstück ausgebildet, an der sich die Schraubenfeder 80 abstützt. Die Schraubenfeder 80 liegt, wenn die Dosierpumpe 62 an die Kolbenpumpe 38 angeschraubt ist, koaxial innerhalb der Schraubenfeder 52 der Kolbenpumpe 38. Weiterhin ist auf den Dosierkolben 60 ein Sprengring aufgesetzt, der gegen die Stirnfläche der Führungsbohrung des Dosierkolbens 60 anschlägt, die von dem verbreiterten Kopfstück des Dosierkolbens 60 abgelegen ist.

Im folgenden wird die Funktionsweise einer solchen Wasserenthärtungsanlage im Prinzip beschrieben. Im Normalbetrieb, wenn lediglich Brauchwasser entnommen wird, ist das Zentralsteuerventil 14 so geschaltet, daß Rohwasser aus der Rohwasserleitung 16 durch den nicht bezeichneten Anschluß des Zentralsteuerventils 14 in den oberen Bereich des Druckbehälters 10 austritt, durch die Austauschermasse 12 hindurchfließt und im unteren Bereich des Druckbehälters 10 in die Anschlußleitung 22 und von dort zur Brauchwasserleitung 18 strömt.

Jedesmal, wenn Brauchwasser entnommen wird, gibt der Wassermengenzähler 40 Impulse an die Programmsteuerung 42 ab, deren Zahl proportional zur entnommenen Menge des Brauchwassers ist. Sobald ein Impuls in der Programmsteuerung 42 ankommt, gibt diese einen Steuerimpuls an das Dreiwege-Magnetventil 36 ab und dieses wird durchgeschaltet von der Brauchwasserleitung 18 zur Kolbenpumpe 38. Nun wird Brauchwasser aus der Brauchwasserleitung 18 in das Innere der Kolbenpumpe 38 gedrückt. Die Vorspannkraft der Schraubenfeder 52 in der Kolbenpumpe 38 ist so gewählt, daß der Kolben 50 bei Beaufschlagung durch den Druck der Brauchwasserleitung 18 bis zu dem zweiten Endanschlag 57 verschoben wird. Nach einer in der Programmsteuerung voreingestellten Zeit wird der Steuerimpuls am Dreiwege-Magnetventil 36 wieder weggenommen und dieses schaltet nun um und verbindet die Kolbenpumpe 38 mit dem Sprühkopf 30 im Vorratsbehälter 24. Der Kolben 50 wird von der Schraubenfeder 52 dann zurück zu dem ersten Endanschlag geschoben und einem diesem Hub entsprechender Inhalt des in die Kolbenpumpe gedrückten Brauchwassers wieder ausgeschoben und vom Sprühkopf 30 über das Regeneriersalz 28 versprüht.

Bei einem nachfolgenden Impuls des Wassermengenzählers 40 gibt die Programmsteuerung 42 wiederum einen Steuerimpuls an das Dreiwege-Magnetventil 36 ab und es wird wiederum die gleiche, dem Hub des Kolbens 50 entsprechende Menge an Brauchwasser zum Vorratsbehälter 24 geführt.

Die Zeit, die die Kolbenpumpe 38 zum Aufnehmen und Ausschieben von Brauchwasser benötigt, ist kürzer als der kürzeste zeitliche Abstand zwischen zwei aufeinanderfolgenden Impulsen vom Wassermengenzähler 40.

Auf diese Weise wird bei jeder Entnahme von Brauchwasser eine der Entnahmemenge und der Härte des Rohwassers entsprechende Menge an Regenerierlösung hergestellt und im Vorratsbehälter 24 bereitgehalten.

Auch wenn die Dosierpumpe 62 an die Kolbenpumpe 38 angeschraubt ist, arbeitet die Kolbenpumpe 38 unverändert in der oben beschriebenen Weise. Im Ruhezustand der Kolbenpumpe 38 ist dann der Dosierkolben 60 durch seine Schraubenfeder 80 in die Endstellung vorgespannt, in der der Dosierkolben 60 zu dem Kolben 50 der Kolbenpumpe 38 hin verschoben ist. Wenn die Kolbenpumpe 38 mit der Brauchwasserleitung verbunden ist und der Kolben 50 zu dem zweiten Endanschlag hin verschoben wird, dann kommt er zur Anlage an das verbreiterte Kopfstück des Kolbens 60 und drückt diesen dann weiter bis zu dessen zweiten Endanschlag. Sobald der Kolben 50 das Brauchwasser aus der Kolbenpumpe 38 wieder ausschiebt, drückt die Schraubenfeder 80 den Dosierkolben 60 zu dem ersten Endanschlag zurück.

Während der Hub des Kolbens 50 der Kolbenpumpe 38 mittels der Feineinstellung 56 verstellbar ist zwischen einem minimalen Hub a und einem maximalen Hub b, führt der Dosierkolben 60 einen konstanten Hub c aus, der durch die beiden Endanschläge des Dosierkolbens 60 festgelegt ist. Jedesmal, wenn der Dosierkolben 60 vom Kolben 50 der Kolbenpumpe 38 gegen den Druck seiner Schraubenfeder 80 verschoben wird, drückt er selber eine definierte Menge von Wasseraufbereitungschemikalien durch eine mit Druckventil 66 versehene Ausgangsleitung in die Brauchwasserleitung. Wenn dann die Schraubenfeder 80 den Dosierkolben 60 gegen den ersten Endanschlag zurückschiebt, sperrt das Druckventil 66 und es wird eine neue definierte Menge von Wasseraufbereitungschemikalien durch ein in einem Eingang angeordnetes Saugventil 64 angesaugt. Die bei jedem Hub in die Brauchwasserleitung eingegebene Menge von Wasseraufbereitungschemikalien ist somit unabhängig von der Härte des Brauchwassers und der entsprechenden Einstellung der Feineinstelleinrichtung 56 der Kolbenpumpe 38.

Ein Regenerationsbetrieb kann nun auf zwei verschiedene Weisen ausgelöst werden, nämlich zum einen durch ein nicht dargestelltes, in der Programmsteuerung vorgesehenes voreinstellbares Zeitsteuerglied und zum anderen durch den Höhenstandsmesser mit Schwimmer 32 und Schalter 34. Mit dem Zeitsteuerglied kann ein maximaler zeitlicher Abstand zwischen zwei Regenerationen in Abhängigkeit von den jeweiligen Betriebsbedingungen voreingestellt werden. Wenn innerhalb dieser maximal zulässigen Zeit die Kapazität der Austauschermasse 12 nur teilweise verbraucht worden ist, dann wird ein Regenerationsbetrieb durch das Zeitsteuerglied ausgelöst. Wenn jedoch die Entnahme von Brauchwasser so hoch ist, daß die Austauschermasse 12 vor Erreichen des voreingestellten maximalen zeitlichen Abstandes ganz oder nahezu erschöpft ist, dann erreicht das Regeneriermittel 26 im Vorratsbehälter 24 eine Höhe, bei der der bereits aufgeschwommene Schwimmer 32 einen Schaltvorgang des Schalters 34 auslöst. Hierdurch wird dann ebenfalls ein Regenerationsbetrieb ausgelöst.

Das wesentliche ist nun darin zu sehen, daß immer eine Menge an Regeneriermittel 26 im Vorratsbehälter 24 bereitgehalten wird, die proportional zu dem Grad der Erschöpfung der Austauschermasse 12 im Druckbehälter 10 und zur Härte des aufzubereitenden Rohwassers ist. Bei jedem Regenerationsbetrieb wird somit immer nur soviel Regeneriermittel 26 durch die Austauschermasse 12 geführt, wie zur Regenerierung der verbrauchten Masse erforderlich ist. Mit gutem Wirkungsgrad kann eine derartige Regenerierung jedoch nur durchgeführt werden, wenn die erfindungsgemäßen Schritte beachtet werden. Der Regenerationsbetrieb muß beginnen mit einer Durchführung von Regeneriermittel von unten nach oben durch die Austauschermasse 12 und zwar mit einer so geringen Geschwindigkeit, daß die einzelnen Partikel in der Austauscherschicht ihre Lage zueinander nicht merklich ändern, wobei die eingeleitete, mit Injektorwasser verdünnte Regeneriermittellösung ihre Konzentration nicht weiter verringert, weil eine Durchmischung der Lösung mit dem langsam nach oben verdrängten Wasser zwischen den einzelnen Partikeln nicht stattfindet. Hierdurch wird erreicht, daß die in der Austauschermasse sich von oben nach unten erstreckende Zone der erschöpften Masse schließlich von der Regeneriermittellösung mit einer optimalen Konzentration erreicht und durchströmt und somit mit optimalem Wirkungsgrad regeneriert wird. Nachfolgend werden die ausgetragenen Ionen unmittelbar über das Zentralsteuerventil in die Kanalisation abgeführt, ohne daß sie mit der übrigen noch austauschaktiven Masse in Kontakt kommen.

Das Regeneriermittel 26 wird aus dem Vorratsbehälter 24 mittels eines in dem Zentralsteuerventil 14 vorgesehenen Injektors in Form einer Wasserstrahlpumpe angesaugt und durch die Anschlußleitung 22 in den unteren Bereich der Austauschermasse 12 geführt. Wenn die im Vorratsbehälter 24 vor jeder Regeneration bereitgestellte Menge an Regeneriermittel 26 verbraucht ist, strömt weiter Wasser durch den Injektor und die Verbindungsleitung 22 ein, bis alle so verdünnte und mit den auszutragenden Ionen verunreinigte Regeneriermittellösung aus der Austauschermasse und dem Freiraum darüber restlos verdrängt ist. Anschließend setzt ein kräftiger Rückspül-Waschvorgang in gleicher Flußrichtung ein, der eine Durchmischung der Masse und Abtrennung und Ausschwemmung angelagerter Feinstoffe bewirkt.

Bei der in Fig. 2 dargestellten alternativen Ausführungsform einer Wasserenthärtungsanlage ist anstelle der Kolbenpumpe 38 ein Zweiwege-Magnetventil 70 in Verbindung mit einem Durchfluß-Konstanthalter 72 vorgesehen. Wenn der Wassermengenzähler 40 einem Impuls an die Programmsteuerung 42 abgibt, dann beaufschlagt diese das Zweiwege-Magnetventil 70 mit einem Impuls und öffnet es für eine Zeitdauer, die der Härte des aufzubereitenden Rohwassers proportional ist. Alternativ hierzu kann in der Programmsteuerung 42 ein Speicher vorgesehen sein, der die von dem Wassermengenzähler 40 abgegebenen Impulse solange speichert, bis entweder das Zeitglied einen Regenerationsbetrieb auslöst oder eine Impulszahl erreicht ist, die einer Erschöpfung der Austauschermasse in Abhängigkeit von der Härte des aufzubereitenden Rohwassers entspricht. Bei dieser Alternative gibt dann die Programmsteuerung 42 vor dem Start eines Regenerationsbetriebes einen Impuls an das Zweiwege-Magnetventil 70 weiter, dessen Dauer der Gesamtzahl der vom Wassermengenzähler 40 seit der letzten Regeneration abgegebenen Impulse proportional ist, so daß eine der entnommenen Brauchwassermenge proportionale Menge von Lösungswasser in den Vorratsbehälter 24 rückgefüllt oder eine proportionale Menge von konzentrierter Regeneriermittellösung eingefüllt wird, bevor die Regeneration eingeleitet wird.

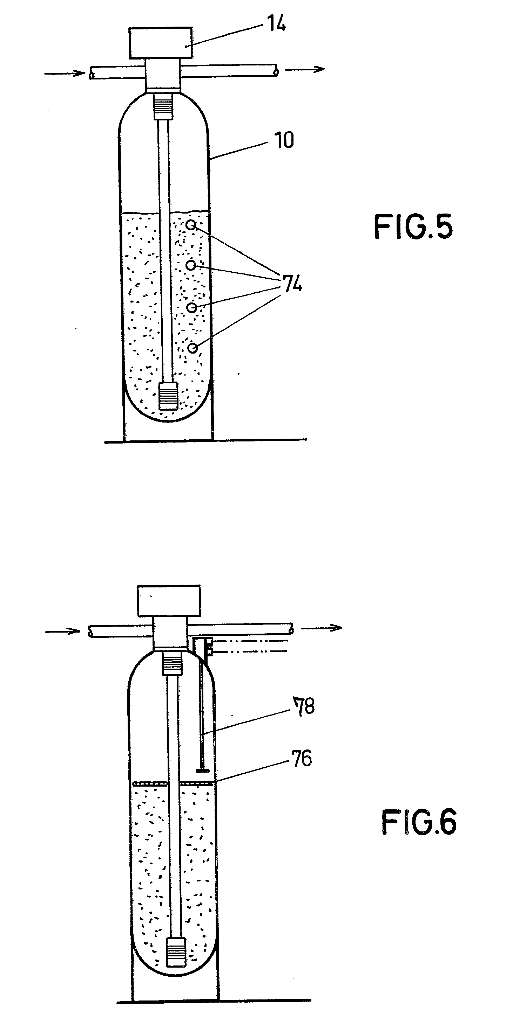

In den Fig. 5 und 6 sind zwei Anordnungen gezeigt, mit denen die fortschreitende Erschöpfung der Austauschermasse überwacht werden kann. Gemäß Fig. 5 sind hierzu in vorbestimmten Abständen von unten nach oben im Druckbehälter 10 Sensoren 74 angeordnet, mit denen die Lage der Grenzschicht zwischen der erschöpften Masse und der noch austauschaktiven Masse in der Austauschermasse ständig festgestellt wird. Bei Auslösung eines Regenerationsbetriebes ist oder wird dann soviel Regeneriermittellösung bereitgestellt, wie der Höhenlage dieser Grenzschicht entspricht. Bei der Ausführungsform gemäß Fig. 6 ist auf die Austauschermasse ein poröser Schwimmkörper 76 aufgelegt. Außerdem ist eine Meßanordnung 78 vorgesehen, mit der die Höhenlage des Schwimmkörpers 76 festgestellt werden kann, die sich während der Erschöpfung der Austauschermasse ändert, da diese während der Beladung mit Ca und Mg-Ionen ihr Volumen verändert.

## Patentansprüche

1. Verfahren zum zyklischen Regenerieren von Wasserenthärtungsanlagen, die eine Austauschermasse (12) in einem Aufbereitungsbehälter (10) und ein Regeneriermittel (26) in einem Vorratsbehälter (24) umfassen, bei welchem zuerst Regeneriermittel (26) von unten nach oben durch die Austauschermasse (12) hindurchgeführt, nachfolgend die Austauschermasse (12) mit Brauchwasser in gleicher Strömungsrichtung langsam nachgewaschen und dann kräftig rückgespult wird, während im Aufbereitungsbetrieb Rohwasser von oben nach unten geführt wird, dadurch gekennzeichnet, daß sowohl ein maximaler zeitlicher Abstand als auch ein maximaler Grad der Erschöpfung der Austauschermasse (12) zwischen zwei Regenerationen vorgewählt werden, daß bei jeder Regeneration nur eine dem Erschöpfungsgrad proportionale Menge an Regeneriermittel (26) benutzt wird und daß das Regeneriermittel (26) mit einer so geringen Strömungsgeschwindigkeit durch die Austauschermasse (12) geführt wird, daß die Partikelschichten in der Austauschermasse (12) im wesentlichen unverändert bleiben.

2. Verfahren nach Anspruch 1, dadurch gekennzeichnet, daß die Strömungsgeschwindigkeit des Regeneriermittels (26) in der Austauschermasse (12) kleiner oder höchstens gleich 1 m/h ist und daß die Strömung des Regeneriermittels (26) in der Austauschermasse (12) laminar ist.

3. Verfahren nach Anspruch 1 oder 2, dadurch gekennzeichnet, daß der Erschöpfungsgrad indirekt durch Messung der entnommenen Menge an Brauchwasser und/oder über die seit der letzten Regeneration bereitgestellte Regeneriermittelmenge ermittelt wird.

4. Verfahren nach Anspruch 3, dadurch gekennzeichnet, daß bei jeder Entnahme von Brauchwasser eine zum Härtegrad des Rohwassers und zur entnommenen Brauchwassermenge proportionale Menge an Regeneriermittel (26) gelöst und bereitgestellt wird.

5. Verfahren nach Anspruch 3, dadurch gekennzeichnet, daß ein zum Härtegrad des Rohwassers und zur entnommenen Brauchwassermenge proportionaler Meßwert (z. B. Impulszahl) bei jeder Entnahme gespeichert und bei der nächsten Regeneration eine der Summe der Meßwerte proportionale Menge an Regeneriermittel bereitgestellt wird.

6. Verfahren nach Anspruch 1 oder 2, dadurch gekennzeichnet, daß der Erschöpfungsgrad durch Überwachung der Lage der Grenzschicht zwischen der austauschaktiven Masse und der erschöpften Masse der Austauschermasse (12) im Aufbereitungsbehälter (10) festgestellt und eine hierzu proportionale Menge an Regeneriermittel (26) bereitgestellt wird.

7. Verfahren nach Anspruch 1 oder 2, dadurch gekennzeichnet, daß der Erschöpfungsgrad durch Messung der Höhe der oberen Grenzschicht der Austauschermasse (12) im Aufbereitungsbehälter (10) festgestellt wird und eine hierzu proportionale Menge an Regeneriermittel (26) bereitgestellt wird.

8. Programmgesteuerte Wasserenthärtungsanlage mit einem eine Austauschermasse (12) aufnehmenden Aufbereitungsbehälter (10), einem ein Regeneriermittel (26) aufnehmenden Vorratsbehälter (24), einem Zentralsteuerventil (14), das Anschlüsse für Rohwasser, Brauchwasser, Regeneriermittel zum oberen und zum unteren Bereich des Aufbereitungsbehälters (10) umfaßt, und einer Programmsteuerung (42), die einen Regenerationsbetrieb in Abhängigkeit von der Härte des Rohwassers und dem Grad der Erschöpfung der Austauschermasse (12) auslöst und zur Regeneration zuerst Regeneriermittel von unten nach oben durch die Austauschermasse (12) hindurchströmen und nachfolgend Brauchwasser in gleicher Strömungsrichtung nachwaschen und dann kräftig rückspülen läßt, insbesondere zur Durchführung des Verfahrens nach einem der Ansprüche 1 bis 7, dadurch gekennzeichnet, daß die Programmsteuerung (42) umfaßt ein auf einen maximalen zeitlichen Abstand zwischen zwei Regenerationen voreinstellbares Zeitsteuerglied, ein auf die Härte des Rohwassers einstellbares Zumeßglied (38; 70, 72), das zu jeder Regeneration eine Menge an Regeneriermittel (26) bereitstellt, die dem Grad der Erschöpfung der Austauschermasse (12) proportional ist, und ein Verzögerungsglied, das die Strömungsgeschwindigkeit des regeneriermittels (26) durch die Austauschermasse (12) soweit herabsetzt, daß die Partikelschichten in der Austauschermasse (12) im wesentlichen unverändert bleiben.

9. Anlage nach Anspruch 8, dadurch gekennzeichnet, daß das Zumeßglied (38) eine Kolbenpumpe zur Rückfüllung von Lösewasser in den Vorratsbehälter (24) ist, dessen Hub in Anpassung an die Härte des Rohwassers einstellbar ist, wie durch ein Anschlagglied (54), das in den Hubraum der Kolbenpumpe (38) hineinragt und zur Hubverstellung in Hubrichtung verschiebbar (56) ist.

10. Anlage nach Anspruch 8 oder 9, dadurch gekennzeichnet, daß ein Mehrwegeventil (36) in eine Abzweigleitung von der Brauchwasserleitung (18) eingesetzt ist, an dessen einen Abgang die Kolbenpumpe (38) und dessen anderen Abgang eine Leitung zum Vorratsbehälter (24) angeschlossen sind und das, von der Programmsteuerung (42) bei einem Brauchwasser-Entnahmeimpuls beaufschlagt, Kolbenpumpe (38) und Brauchwasserleitung (18) und eine vorbestimmte Zeit danach Kolbenpumpe (38) und Vorratsbehälter (24) miteinander verbindet, und daß der Kolben (50) in der Kolbenpumpe (38) vorgespannt (52) ist, derart, daß er in die Pumpe gedrücktes Brauchwasser nach Umschaltung des Mehrwegeventils (36) in den Vorratsbehälter (24) drückt.

11. Anlage nach einem der Ansprüche 8 bis 10, dadurch gekennzeichnet, daß eine Dosierpumpe (62) mit einem Ansaugventil (64) und einem Druckventil (66) für Wasseraufbereitungschemikalien mit der Kolbenpumpe (38) koppelbar ist, deren Dosierkolben (60) vom Kolben (50) der Kolbenpumpe (38) betätigbar ist.

12. Anlage nach Anspruch 11, dadurch gekennzeichnet, daß ein die Schraubenfeder (52) abstützender Deckel (82) von der Kolbenpumpe (38) abschraubbar ist, daß die Dosierpumpe (62) ein Kopplungsglied (84) aufweist, das anstelle des Deckels (82) in die Kolbenpumpe (38) einschraubbar ist, und daß die Dosierpumpe (62) einen Dosierkolben (60) aufweist, der von einer Schraubenfeder (80) gegen einen festen Endanschlag (86) vorgespannt ist und bei einem Hub des Kolbens (50) der Kolbenpumpe (38) gegen dessen zweiten Endanschlag (57) gegen einen eigenen zweiten Endanschlag (88) bewegt wird.

13. Anlage nach einem der Ansprüche 8 bis 12, dadurch gekennzeichnet, daß ein Höhenstandsmesser (32, 24) im Vorratsbehälter (24) vorgesehen ist, der bei Erreichen einer maximal vorbestimmten Höhe des Regeneriermittels (26) einen Regenerationsbetrieb auslöst.

14. Anlage nach Anspruch 8, dadurch gekennzeichnet, daß das Zumeßglied einen in die Brauchwasserleitung eingesetzten Wassermengenzähler (40) aufweist, der zur Summe der seit der letzten Regeneration entnommenen Teilmengen an Brauchwasser proportionale Signale (z. B. Zählimpulse) an die Programmsteuerung (42) abgibt, die ein Zumeßventil (70, 72) zur Zuführung von Lösewasser in den Vorratsbehälter (24) in Abhängigkeit von den Signalen und der Härte des Rohwassers beaufschlagt.

15. Anlage nach Anspruch 8, dadurch gekennzeichnet, daß das Zumeßglied Sensoren (74) zur Überwachung der Lage der Grenzschicht zwischen austauschaktiver Masse und erschöpfter Masse oder eine Anordnung (76, 78) zur Messung der Höhe der austauschaktiven Masse im Aufbereitungsbehälter (10) umfaßt.

## Claims

1. A method of cyclic regeneration of water softening apparatus having an exchanger substance (12) in a processing vessel (10) and a regenerating agent (26) in a storage tank (24), in which first the regenerating agent is caused to flow from bottom to top through the exchanger substance (12) and then the exchanger substance (12) is slowly washed with utility water in the same direction of flow and then strongly backflushed, while in the processing operation untreated water flows from top to bottom, characterized in that both a maximum time interval and a maximum degree of exhaustion of the exchanger substance (12) between two regenerations are preselected, that during each regeneration only an amount of the regenerating agent (26) proportional to the degree of exhaustion is used, and that the regenerating agent (26) flows through the exchanger substance (12) at such a slow velocity of flow that the particle layers in the exchanger substance (12) remain substantially unchanged.

2. A method according to Claim 1, characterized in that the velocity of flow of the regenerating agent (26) in the exchanger substance (12) is smaller or at the most equal to 1 m/h and that the flow of the regenerating agent (26) in the exchanger substance (12) is laminar.

3. A method according to Claim 1 or 2, characterized in that the degree of exhaustion is detected indirectly by the measurement of the drawn off amount of utility water and/or via the amount of the regenerating agent made available since the last regeneration.

4. A method according to Claim 3, characterized in that during every drawing off of utility water there is dissolved and made available an amount of the regenerating agent (26) which is proportional to the degree of hardness of the untreated water and to the amount of drawn utility water.

5. A method according to Claim 3, characterized in that a measured value (e. g. a number of pulses), proportional to the degree of hardness of the untreated water and to the drawn amount of utility water, is stored during every drawing, and an amount of the regeneration agent proportional to the sum of the measured values is made available during the next regenration.

6. A method according to Claim 1 or 2, characterized in that the degree of exhaustion is determined by checking the position of the boundary layer between the exchange-active substance and the exhausted substance in the exchanger substance (12) in the processing vessel (10), and an amount of the regenerating agent (26) which is proportional thereto is made available.

7. A method according to Claim 1 or 2, characterized in that the degree of exhaustion is determined by measuring the height of the upper boundary layer of the exchanger substance (12) in the processing vessel (10), and an amount of regenerating agent (26) which is proportional thereto is made available.

8. A program-controlled water softening apparatus comprising a processing vessel (10) containing an exchanger substance (12), a storage tank (24) containing a regenerating agent (26), a central control valve (14), which includes connections for untreated water, utility water, (and) regenerating agent to the upper and the lower region of the processing vessel (10), and a program control (42) which triggers a regeneration operation in dependence on the hardness of the untreated water and the exhaustion of the exchanger substance (12), and for regeneration at first allows regenerating agent to flow from bottom to top through the exchanger substance (12) and subsequently allows utility water to wash in the same direction and then strongly backflush, particularly for carrying out the method according to one of Claims 1 to 7, characterized in that the program control (42) includes a time-control element, preadjustable to a maximum time interval between two regenerations, a metering element (38; 70, 72) adjustable to the hardness of the untreated water, which makes available for every regeneration an amount of the regenerating agent (26) which is proportional to the degree of exhaustion of the exchanger substance (12), and a delay element which reduces the velocity of flow of the regenerating agent (26) through the exchanger substance (12) to such an extent that layers of particles in the exchanger substance (12) remain substantially unchanged.

9. An apparatus according to Claim 8, characterized in that the metering element (38) is a piston pump for refilling solvent water to the storage tank (24), the length of which stroke is adjustable according to the hardness of the untreated water and also by a stop (54) which extends into the piston-swept volume of the piston pump (38) and is displaceable in the direction of stroke (56), for readjustment of the stroke.

10. An apparatus according to Claim 8 or 9, characterized in that a multiple-way valve (36) is incorporated into a branch of the utility water conduit (18), to one of which outlets is connected the piston pump (38) and to another outlet of which is connected a conduit to the storage tank (24), and which (valve) is operated, when there is a utility water draw-off pulse, by the program control (42) and connects the piston pump (38) and utility water conduit (18) and a preselected period of time later the piston pump (38) and the storage tank (24), and that the piston (50) in the piston pump (38) is pretensioned (52) such that it presses the utility water forced into the pump, after switching over of the multiple-way valve (36), into the storage tank (24).

11. An apparatus according to one of Claims 8 to 10, characterized in that a metering pump (62), having a suction valve (64) and a pressure valve (66) for the water treatment chemicals, is connectable to the piston pump (38), the metering piston (60) of which is actuatable by the piston (50) of the piston pump (38).

12. An apparatus according to Claim 11, characterized in that a lid (82) supporting the helical spring (52) may be screwed off the piston pump (38), that the metering pump (62) has a coupling element (84) which may be screwed into the piston pump (38) instead of the lid (82), and that the metering pump (62) has a metering piston (60) which is pretensioned by a helical spring (80) against a fixed stop (86) and, when the piston (60) of the piston pump (38) moves against its second stop (57), moves against its own second stop (88).

13. An apparatus according to one of the Claims 8 to 12, characterized in that a level measuring device (32, 34) is provided in the storage tank (24) which, when the regenerating agent (26) reaches its maximum predetermined level, triggers the regeneration operation.

14. An apparatus according to Claim 8, characterized in that the metering element comprises a water meter (40) incorporated into the utility water conduit, which gives signals (e. g. counting pulses) proportional to the sum of the partial amounts of utility water drawn off since the last regeneration, which actuates a metering valve (70, 72) for supplying solvent water to the storage tank (24) in dependence on the signals and the hardness of the untreated water.

15. An apparatus according to Claim 8, characterized in that the metering element includes sensors (74) for checking the position of the boundary layer between the exchange-active substance and the exhausted substance, or a device (76, 78) for measuring the height of the exchange-active substance in the processing vessel (10).

**Revendications**

1. Procédé pour la régénération cyclique des installations d'adoucissement d'eau qui comprennent une masse d'échangeur d'ions (12) dans un récipient de traitement (10) et un produit régénérateur (26) dans un réservoir de stockage (24), dans lequel on fait tout d'abord passer le produit régénérateur (26) de bas en haut à travers l'échangeur d'ions (12), puis la masse d'échangeur d'ions (12) est soumise à un lavage lent dans le même sens d'écoulement avec de l'eau industrielle, puis est vigoureusement rincée, tandis que, dans l'opération de traitement, l'eau brute s'écoule de haut en bas, caractérisé en ce que l'on pré-sélectionne aussi bien un intervalle de temps maximal qu'un degré d'épuisement maximal de l'échangeur d'ions (12) entre deux phases de régénération, en ce qu'à chaque régénération, il n'est utilisé qu'une quantité de produit régénérateur (26) proportionnelle au degré d'épuisement, et en ce que le produit régénérateur (26) traverse l'échangeur d'ions (12) à une vitesse d'écoulement suffisamment faible pour que les couches de particules dans la masse d'échangeur d'ions (12) restent sensiblement sans changement.

2. Procédé selon la revendication 1, caractérisé en ce que la vitesse d'écoulement du produit régénérateur (26) dans la masse d'échangeur d'ions (12) est inférieure ou tout au plus égale à 1 m/h et en ce que l'écoulement du produit régénérateur (26) dans l'échangeur d'ions (12) est laminaire.

3. Procédé selon la revendiaction 1 ou 2, caractérisé en ce que le degré d'épuisement est déterminé directement par mesure de la quantité d'eau industrielle prélevée et/ou par l'intermédiaire de la quantité du produit régénérateur mis à disposition depuis la dernière régénération.

4. Procédé selon la revendication 3, caractérisé en ce qu'à chaque prélèvement d'eau industrielle, une quantité de produit régénérateur proportionnelle au degré de dureté de l'eau brute et à la quantité d'eau industrielle prélevée est dissoute et mise à disposition.

5. Procédé selon la revendication 3, caractérisé en ce qu'une valeur mesurée (par exemple nombre d'impulsions) proportionelle au degré de dureté de l'eau brute et à la quantité d'eau industrielle prélevée est mise en mémoire à chaque prélèvement, et en ce que, à la régénération suivante, est mise à disposition une quantité de produit régénérateur proportionelle à la somme des valeurs mesurées.

6. Procédé selon la revendication 1 ou 2, caractérisé en ce que le degré d'épuisement est déterminé par surveillance de la position de la couche limite entre la partie encore capable d'échange et la partie équisée de l'échangeur d'ions (12) dans le récipient de traitement (10), et en ce qu'une quantité de produit régénérateur (26) proportionnelle à ce degré d'épuisement est mise à disposition.

7. Procédé selon la revendication 1 ou 2, caractérisé en ce que le degré d'épuisement est détermine par la mesure de la hauteur de la couche limite supérieure de la masse d'échangeur d'ions (12) dans le récipient de traitement (10), et en ce qu'une quantité de produit régénérateur (26) proportionnelle à cette valeur est mise à disposition.

8. Installation d'adoucissement d'eau à commande à programme avec un récipient de traitement (10) recevant une masse d'échangeur d'ions (12), un réservoir de stockage (24) recevant un produit régénérateur (26), une vanne-pilote centrale (14) qui contient des raccordements pour l'eau brute, l'eau industrielle, le produit générateur avec la partie supérieure et la partie inférieure du récipient de traitement (10), et avec une commande à programme (42) qui déclenche un processus de régénération en fonction de la dureté de l'eau brute et du degré d'épuisement de l'échangeur d'ions (12), et qui, pour effectuer la régénération, fait tout d'abord s'écouler le produit de régénération de bas en haut à travers la masse d'échangeur d'ions, puis fait effectuer un lavage en faisant s'écouler dans le même sens de l'eau industrielle et ensuite procède à un rinçage vigoureux, notamment destiné à la mise en oeuvre du procédé selon une quelconque des revendications 1 à 7, caractérisé en ce que la commande à programme (42) comprend un élément de commande de synchronisation préréglable sur un intervalle de temps maximal entre deux régénérations, un élément de mesure (38; 70, 72) réglable sur la dureté de l'eau brute qui, lors de chaque phase de régénération, met à disposition une quantité de produit régénérateur (26) qui est proportionnelle au degré d'épuisement de l'échangeur d'ions (12), et un élément de retard qui diminue la vitesse d'écoulement du produit régénérateur (26) à travers l'échangeur d'ions (12) suffisamment pour que les couches de particules dans la masse d'échangeur d'ions (12) restent pour l'essentiel sans modification.

9. Installation selon la revendication 8, caractérisée en ce que l'élément de mesure (38) est une pompe à piston ayant pour role de refouler de l'eau de solution dans le réservoir de stockage (24), dont la course est réglable en adaptation à la dureté de l'eau brute, par exemple à l'aide d'un élément de butée (54) qui fait saillie à l'intérieur de la chambre de course de la pompe à piston (38) et est déplaçable (56) dans le sens de la course de piston pour régler cette course.

10. Installation selon la revendication 8 ou 9, caractérisée en ce qu'une vanne à plusieurs voies (36) est montée dans une dérivation de la conduite d'eau industrielle (18), la pompe à piston (38) étant raccordée à l'une de ses sorties, et une conduite menant au réservoir de stockage (24) étant raccordée à une autre sortie, et cette vanne recevant une impulsion de la commande à programme (42) à chaque impulsion de prélèvement d'eau industrielle, mettant en liaison entre eux la pompe à piston (38) et la conduite d'eau industrielle (18), puis, après un laps de temps prédéterminé, la pompe à piston (38) et le réservoir de stockage (28), et en ce que le piston (50) est monté sous pré-tension (52) dans la pompe à piston (38) de telle sorte qu'après commutation de la vanne à plusieurs voies (36), il refoule dans le réservoir de stockage (24) l'eau industrielle refoulée dans la pompe.

11. Installation selon une quelconque des revendications 8 à 10, caractérisée en ce qu'une pompe de dosage (62) munie d'une soupape d'aspiration (64) et d'une soupape de refoulement (66) pour produits chimiques de traitement de l'eau peut être accouplée avec la pompe à piston (38), le piston de dosage (60) de ladite pompe étant actionné par le piston (50) de la pompe à piston (38).

12. Installation selon la revendication 11, caractérisée en ce qu'un couvercle (82) formant appui pour le ressort à boudin (52) peut etre dévissé de la pompe à piston (38), en ce que la pompe de dosage (62) comporte un organe d'accouplement (84) qui peut etre vissé dans la pompe à piston (38) au lieu du couvercle (82) et en ce que la pompe de dosage (62) comporte un piston de dosage (60) qui est maintenu appliqué sous prétension par un ressort à boudin (80) contre une butée de fin de course (86) fixe, et, lors d'un déplacement du piston (50) de la pompe à piston (38) vers sa deuxième butée de fin de course (57), est lui-même déplacé vers une deuxième butée de fin de course (88) qui lui est propre.

13. Installation selon une quelconque des revendications 8 à 12, caractérisée en ce qu'il est prévu un indicateur de hauteur de niveau (32, 34) dans le réservoir de stockage (24) qui, lorsqu'est atteinte une hauteur maximale prévue du produit régénérateur (26), déclenche une phase de régénération.

14. Installation selon la revendication 8, caractérisée en ce que l'organe de mesure comporte un pompteur d'eau (40) monté dans la conduite d'eau industrielle qui transmet à la commande à programme (42) des signaux (par exemple impulsions de comptage) proportionnels à la somme des quantités partielles d'eau industrielle prélevées depuis la dernière régénération, et en ce que la commande à programme transmet des impulsions de commande à une vanne de dosage (70, 72) ayant pour role d'introduire de l'eau de solution dans le réservoir de stockage (24) en fonction des signaux et de la dureté de l'eau brute.

15. Installation selon la revendication 8, caractérisée en ce que l'organe de dosage comprend des capteurs (74) ayant pour rôle de surveiller et déterminer la position de la couche limite entre la partie encore capable d'échange et la partie épuisée de la masse échangeur d'ions, ou bien un dispositif (76, 78) adapté à mesurer la hauteur de la masse encore active d'échangeur d'ions dans le récipient de traitement (10).

FIG.1

FIG.2

FIG.3

FIG.4

FIG.5

FIG.6